Europäisches Patentamt

European Patent Office

Office européen des brevets

(19)

(11) Numéro de publication: **0 055 959**
**A2**

(12) ## DEMANDE DE BREVET EUROPEEN

(21) Numéro de dépôt: **81402030.1**

(22) Date de dépôt: **18.12.81**

(51) Int. Cl.³: **F 25 B 41/04**
**F 16 K 15/02**

(30) Priorité: **06.01.81 FR 8100097**

(43) Date de publication de la demande:
**14.07.82 Bulletin 82/28**

(84) Etats contractants désignés:
**BE DE GB SE**

(71) Demandeur: **L'UNITE HERMETIQUE S.A.**
**Route de Lyon**
**F-38290 La Verpilliere(FR)**

(72) Inventeur: **Grollier-Baron, Adrien**
**THOMSON-CSF SCPI 173, bld Haussmann**
**F-75360 Paris Cedex 08(FR)**

(74) Mandataire: **Meslin, Suzanne et al,**
**THOMSON-CSF SCPI 173, Bld Haussmann**
**F-75360 Paris Cedex 08(FR)**

(54) **Pompe à chaleur.**

(57) Pompe à chaleur comportant un circuit thermodynamique fermé associé à un circuit de chauffage fermé l'échange thermique entre les fluides circulant dans ces deux circuits s'établissant au niveau d'un condenseur (4).

Un dispositif de retenue (3) à clapet (17) est placé sur la tubulure de refoulement d'un compresseur (2) du circuit thermodynamique, entre ce compresseur (2) et le condenseur (4), empêchant, en cas d'arrêt prolongé du fonctionnement du circuit thermodynamique, une circulation à contre sens du fluide du circuit thermodynamique.

Application : Machines thermiques à compression.

Fig.1

EP 0 055 959 A2

POMPE A CHALEUR.

La présente invention a pour objet une pompe à chaleur et plus particulièrement un dispositif de retenue sur la conduite de refoulement du compresseur équipant cette pompe à chaleur.

Une pompe à chaleur classique comporte un circuit thermodynamique dans lequel sont habituellement disposés, en série, un évaporateur, un compresseur, un condenseur et un détendeur reliés entre eux par des tubulures pour former un circuit fermé parcouru par un premier fluide. Cette pompe à chaleur comporte également un circuit de chauffage dans lequel circule un second fluide. Le circuit thermodynamique permet, au niveau du condenseur, de céder de la chaleur au fluide du circuit de chauffage. Le premier fluide de trouvant à température ambiante s'échauffe dans le compresseur, et communique cette chaleur au second fluide. En effet, le compresseur aspire le premier fluide, à l'état gazeux, venant de l'évaporateur, le comprime et le refoule à une pression telle que ce premier fluide peut se liquéfier à la température du condenseur en abandonnant, au niveau du condenseur, la chaleur latente de vaporisation qui est transmise au milieu à chauffer, par l'intermédiaire du second fluide circulant dans le circuit de chauffage. Le premier fluide est ensuite détendu dans le détendeur qui abaisse sa pression, puis se dirige vers l'évaporateur.Le cycle thermodynamique de la pompe à chaleur est amorcé. Le circuit de chauffage associé à la pompe à chaleur comporte en série une chaudière avec un brûleur, un circulateur, et des radiateurs réunis par des tubulures. Ces tubulures permettent de faire circuler le second fluide de la chaudière vers le condenseur via le circulateur et les radiateurs. Après s'être réchauffé dans le condenseur, le second fluide est reconduit par les tubulures à la chaudière. Le cycle de chauffage de la pompe à chaleur est amorcé. Bien souvent, des concours de circonstances nécessitent un arrêt plus ou moins prolongé du circuit thermodynamique de la pompe, alors que le fluide de chauffage circule toujours dans le condenseur et maintient le fluide à chauffer

2

contenu dans celui-ci à sa température de condensation. En effet, un arrêt peut survenir lorsque la température de l'air ambiant, au niveau de l'évaporateur, est trop basse. A ce moment là, le compresseur s'arrête, la pompe n'est plus en mesure d'assurer le chauffage. Le brûleur de la chaudière prend le relais. Le fluide passant dans le condenseur est alors maintenu à une température élevée, alors que le compresseur tend à prendre la température ambiante du milieu qui l'entoure. Or, dès que le premier fluide qui se trouve dans le compresseur atteint une température inférieure à celle du fluide du circuit de chauffage, au niveau du condenseur, une circulation intempestive, à contre courant du flux normal se produit et le premier fluide se condense dans le compresseur.

Le problème posé est par conséquent de supprimer cette circulation intempestive à contre courant du flux normal qui risque d'endommager le compresseur. Aussi, la présente invention propose de remédier à cet inconvénient.

Suivant l'invention, une pompe à chaleur comportant un circuit thermodynamique fermé comprenant un compresseur, un condenseur, ce circuit, dans lequel circule un premier fluide, étant associé à un circuit de chauffage constituant une boucle fermée dans laquelle circule un second fluide, un échange thermique entre ces deux fluides ayant lieu au niveau du condenseur, est caractériséeen ce qu'un dispositif de retenue est placé dans le circuit thermodynamique, entre le compresseur et le condenseur, de façon à éviter une circulation du premier fluide dans le sens condenseur-compresseur lors d'un arrêt prolongé du fonctionnement du circuit thermodynamique de la pompe à chaleur.

La présente invention sera mieux comprise à l'aide de la description détaillée d'un mode de réalisation pris comme exemple non limitatif et illustré par les figures annexées :

- La figure 1 représente un schéma d'une pompe à chaleur selon l'invention, associée à une installation de chauffage ;

- La figure 2 représente le schéma d'un dispositif de retenue utilisé dans la pompe à chaleur de la figure 1.

3

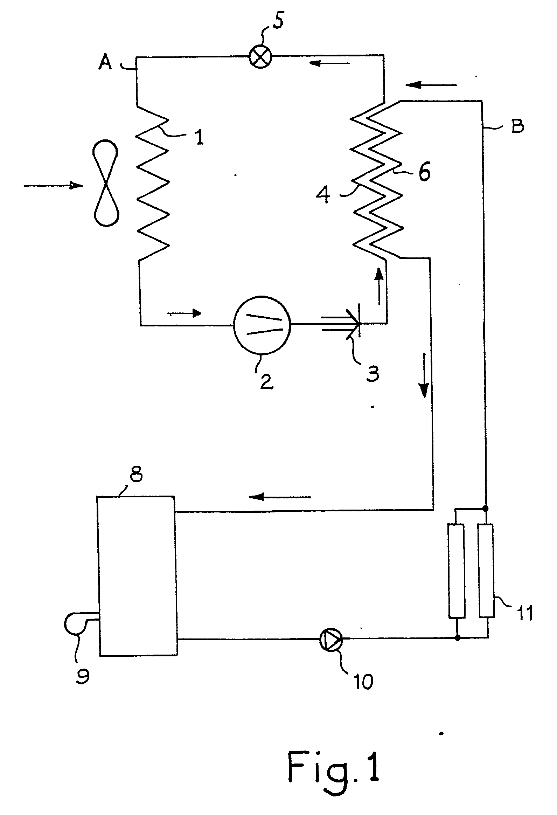

La pompe à chaleur suivant l'invention, représentée schématiquement en figure 1 comporte, en série, un évaporateur 1, un compresseur 2, un premier élément 4 de condenseur, un détendeur 5, reliés entre eux par des tubulures de façon à former un circuit fermé parcouru par un premier fluide. Ce circuit fermé constitue le circuit thermodynamique de la pompe à chaleur. Ce premier fluide est, dans cet exemple de réalisation, un gaz. Ce circuit thermodynamique comporte, de plus, entre le compresseur 2 et l'élément 4 du condenseur, un dispositif de retenue 3 dont un exemple de réalisation sera décrit dans ce qui suit.

Le circuit thermodynamique de la pompe à chaleur est associé à un circuit de chauffage comprenant un second élément 6 du condenseur formant, avec le premier élément 4, un échangeur thermique, une chaudière 8 à laquelle est adjoint un brûleur 9, un circulateur 10 et des radiateurs 11. Dans ce circuit de chauffage, formant une boucle fermée, peut circuler un second fluide, de l'eau par exemple, issu d'une installation hydraulique.

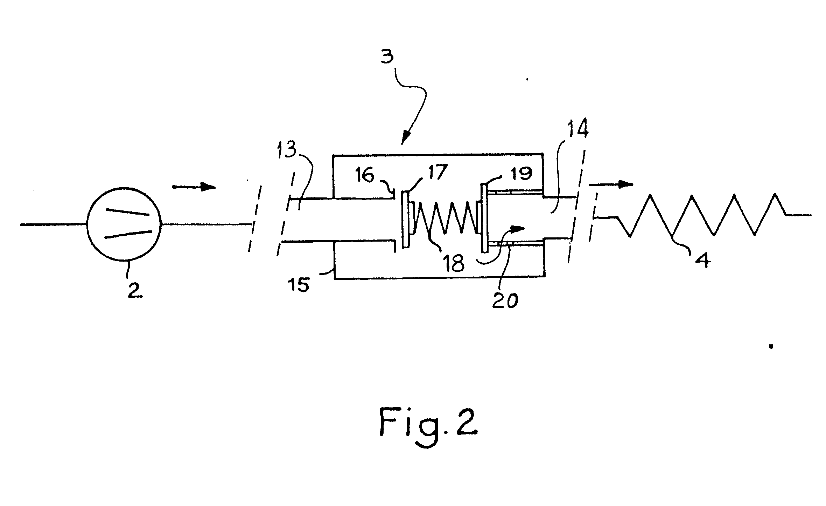

Sur la figure 2 est représenté un dispositif de retenue selon l'invention. Ce dispositif comporte un corps 15 enveloppant l'ensemble des éléments constituant tout le dispositif de retenue 3. Ce corps 15 est relié par des tubulures 13,14 d'une part au compresseur 2 et, d'autre part, au condenseur 4. Ces tubulures 13,14 viennent pénétrer à l'intérieur du dispositif en passant par deux ouvertures situées de part et d'autre du corps 15. La tubulure 13 issue du compresseur 2 a son extrémité aplatie, de façon à former un siège 16. La tubulure 14 issue du condenseur 4 présente des perforations 20. A l'extrémité de ce dernier est placée une butée 19 sur laquelle est fixée un ressort à spirale 18. Le dispositif de retenue 3 comporte également un clapet 17 constitué par un disque plein de faible

4

épaisseur solidaire de ce ressort de rappel 18.

En fonctionnement, le premier fluide, généralement un gaz, circulant dans le circuit A et constituant la source froide, vient se réchauffer et s'évaporer dans l'évaporateur 1 au contact de l'air à température ambiante (figure 1). Cette vapeur est ensuite compressée dans le compresseur 2 et est portée à une pression telle que le clapet 17 du dispositif de retenue 3 (figure 2) s'ouvre en comprimant le ressort de rappel 18 contre la butée 19. Une légère différence de pression s'établit entre la face du clapet 17 recevant la vapeur sous pression et la face du clapet 17 solidaire du ressort 18. Cette différence de pression est de l'ordre de 0,075 bar dans cette réalisation. Les pertes de charge dans le dispositif de retenue 3 sont négligeables. La vapeur sort du corps 15 par les perforations 20 de la tubulure 14 et se dirige vers le condenseur 4. Le premier fluide arrivant dans le condenseur 4 se refroidit au contact des parois froides de ce condenseur 4. En se refroidissant, il se liquéfie. La chaleur qu'il libère permet de réchauffer le fluide du circuit B de chauffage. Le fluide liquéfié va ensuite passer dans le détendeur 5 qui va rabaisser sa pression et renvoyer ce fluide vers l'évaporateur 1. Le cycle se poursuit jusqu'à ce que l'eau se trouvant dans le circuit de chauffage ait atteint la température demandée.

Lors d'un arrêt prolongé de la pompe, qui est provoqué soit par la régulation, soit par la maintenance, soit parce que la température de l'air extérieur au niveau de l'évaporateur est trop basse, il tend à s'établir une circulation intempestive à contre courant du flux normal car le premier fluide qui se trouve dans le compresseur 2 n'est pas assez chaud, alors que celui qui se trouve dans le compresseur 4 reste toujours chaud, étant maintenu à une température élevée par le second fluide du circuit de chauffage circulant dans le condenseur 4. Cette circulation à contre sens du premier fluide allant du condenseur 4 vers le compresseur 2 est arrêtée au niveau du dispositif de retenue 3. En effet, ce dispositif de retenue 3 étant placé entre le compresseur 2 et le condenseur 4, reçoit, à l'extrémité située du côté du condenseur 4, le premier fluide

5

circulant à contre sens, et reçoit, à l'extrémité située du côté du compresseur 2, le premier fluide circulant en sens normal. La pression s'égalise de façon progressive, ce qui permet au ressort 18 de rappel de se détendre et de venir pousser le clapet 17 contre le siège 16. La réalisation de cette pompe à chaleur, comprenant un tel dispositif de retenue (3), assure la protection du compresseur et empêche les pertes de chaleur lors d'un arrêt prolongé de la pompe à chaleur.

6

## REVENDICATIONS

1. Pompe à chaleur comportant un circuit thermodynamique fermé comprenant un compresseur (2) et un condenseur (4), ce circuit dans lequel circule un premier fluide étant associé à un circuit de chauffage constituant une boucle fermée dans laquelle circule un second fluide, un échange thermique entre les deux fluides ayant lieu au niveau du condenseur (4), caractérisée en ce qu'un dispoositif de retenue (3) est placé dans le circuit thermodynamique, entre le compresseur (2) et le condensateur (4) de façon à éviter une circulation du premier fluide dans le sens condenseur (4) - compresseur (2) lors d'un arrêt prolongé du fonctionnement du circuit thermodynamique de la pompe à chaleur.

2. Pompe à chaleur selon la revendication 1, caractérisée en ce que le dispositif de retenue (3), disposé sur la conduite de refoulement du compresseur (2) comporte un clapet (17) qui s'ouvre lorsque la pression du premier fluide dans le compresseur (2) est supérieure à sa pression dans le condenseur (4).

3. Pompe à chaleur selon la revendication 2, caractérisée en ce que le dispositif de retenue (3) comporte également un corps (15) de clapet à l'intérieur duquel est situé un clapet (17), un siège (16) sur lequel vient buter ce clapet (17) lorsque le fluide circule à contre sens, un ressort (18) de rappel du clapet (17) et une butée (19) pour le ressort (18).

4. Pompe à chaleur selon la revendication 3, caractérisée en ce que le ressort (18) de rappel permet d'actionner le clapet (17), de sorte que, lorsque la pression du premier fluide augmente à l'extrémité du dispositif de retenue (3), située du côté du compresseur (2), le ressort (18) est comprimé et tire le clapet (17), le premier fluide pouvant ainsi circuler dans le sens compresseur (2) - condenseur (4), et lorsque la pression du premier fluide devient progressivement supérieure à l'extrémité du dispositif de retenue (3) située du côté du condenseur (4), le ressort (18) se détend et ferme le clapet (17), empêchant le premier fluide de passer dans le sens condenseur (4) - compresseur (2).

5. Pompe à chaleur selon la revendication 3, caractérisée en ce que le siège (16) est constitué par une extrémité aplatie du tube de refoulement issu du compresseur (2), de sorte que le clapet (17) vient s'appuyer sur cette extrémité aplatie du siège (16) et arrête, de façon très hermétique, la circulation du premier fluide à contre sens.

0055959

Fig.1

Fig.2